# EUROPÄISCHE PATENTSCHRIFT

(11) **EP 1 754 451 B1**
(45) Veröffentlichungstag und Bekanntmachung des Hinweises auf die Patenterteilung: **16.12.2009**
(21) Anmeldenummer: 06016820.0
(22) Anmeldetag: 11.08.2006
(51) Int. Cl.: A61C 17/26

(54) **Rotationszahnbürste**
Toothbrush with rotating brushes
Brosse à dents rotative

(30) Priorität: 16.08.2005 DE 102005038624
(43) Veröffentlichungstag der Anmeldung: 21.02.2007
(73) Patentinhaber: Bittl, Albert, 80335 München (DE)
(72) Erfinder: Bittl, Albert, 80335 München (DE)

(56) Entgegenhaltungen:
- WO-A-97/42908
- US-A- 2 618 797
- US-A- 3 739 416
- US-A- 4 163 300

## Beschreibung

Die Erfindung betrifft eine Rotationszahnbürste in Rohrform-Bauweise nach dem Oberbegriff des Anspruches 1 mit elektrischem Antrieb, der ein- und ausschaltbar und dessen Drehrichtung wählbar ist. Die Stromversorgung erfolgt in bekannter Weise durch Akku- oder Netzbetrieb.

Bekannte elektrisch betriebene Zahnbürsten nutzen zum Reinigen der Zähne entweder Drehschwingungen der Bürste oder kleine rotierende Rundbürsten , deren Drehachse senkrecht zum Zahn gerichtet ist. Diese Bürsten haben den prinzipiellen Nachteil, dass die Bürstrichtung sowohl vom Zahnfleisch weg in Richtung zur Zahnkrone erfolgt, was erwünscht ist, als auch vom Zahn gegen das Zahnfleisch, was höchst nachteilig ist, weil dadurch weggeputzte Ablagerungen, Plaque, Mundbakterien, Zahnpasta und Flüssigkeit zwischen den Zahnfleischansatz am Zahn gebürstet werden können.
Entzündungen des Zahnfleisches, Parodontose und Karies werden dadurch begünstigt.

Es sind auch Rotationszahnbürsten bekannt, die eine walzenförmige Bürste verwenden, wobei jedoch das Einschalten der gewünschten Drehrichtung über einen handbetätigten Wippschalter erfolgt. Die Bedienung dieser Zahnbürsten ist umständlich, und sie konnten sich deshalb nicht durchsetzen.
Aus DE- 1198783 C ist eine gattungsgemäße Rotationszahnbürste bekannt, die über der Bürste einen Bügel oder eine Muffe besitzt, mit denen die Drehrichtung geschaltet wird. Diese Zahnbürsten sind dadurch etwas unförmig, sodass der Backenzahnbereich beim Putzen nicht gut erreicht wird. Außerdem muss dieses äußere Betätigungsglied einerseits das Gehäuse drehbar überdecken und muss sich andererseits durch das Gehäuse erstrecken, in diesem gelagert und bis in Motornähe zur Kontaktbetätigung geführt sein. Dies bedeutet einen erheblichen konstruktiven Aufwand, der das Gerät schwer und teuer macht.

Aus der US 3739416 ist auch eine Rotationszahnbürste bekannt, bei welcher die Drehrichtung umgeschaltet wird.

Der Erfindung liegt die Aufgabe zugrunde, die Benutzerfreundlichkeit von Rotationszahnbürsten zu verbessern, ohne den Bauaufwand zu erhöhen.

Die Aufgabe wird durch eine Rotationszahnbürste mit den Merkmalen des Anspruches 1 gelöst. Vorteilhafte Weiterbildungen sind Gegenstand der Unteransprüche. Dieses Ziel ist dadurch erreicht, dass die Rotationszahnbürste zunächst in gewohnter Weise in den Mund geführt und zur Anlage gebracht wird, dann wird erfindungsgemäß das Gehäuse ansatzweise, um etwa 20 Grad, in die gewünschte Richtung - bürsten vom Zahnfleisch zum Zahn - gedreht, wodurch der Motor einschaltet und die erforderliche Drehbewegung ausführt. Durch Abheben der Bürste wird der Motor wieder stillgesetzt. Durch die manuelle Vorgabe der gewünschten Drehbewegung dreht sich das Gehäuse relativ zum Motor, der über das Getriebe mit der angelegten Zahnbürste formschlüssig verbunden ist und so durch deren Anlage im Mund ebenfalls vorübergehend in Ruhe gehalten wird. Durch die relative Verdrehung von Gehäuse und Motor wird eine mit ihm gekoppelte Schalteinrichtung federnd als Drehmomentstütze des Motors betätigt. Kommt die Zahnbürste außer Anlage, fällt das Lastmoment ab, und damit das Reaktionsmoment an der Drehmomentstütze, wodurch infolge Rückstellfederkraft die Schalteinrichtung in Neutralstellung gelangt und der Motor ausschaltet.

Die vereinfachte Handhabung der erfindungsgemäßen Rotationszahnbürste besteht in den alleinigen Ein- und Ausführen der Zahnbürste in bzw. aus dem Mund, um die Rotationsbewegung in der gewünschten Richtung ein- und dann auszuschalten, wozu nur noch die ansatzweise Drehbewegung zur Einleitung erforderlich ist. Diese Drehbewegung kann durch geringfügiges, relatives Drehen des Gehäuses erzeugt werden oder durch Abrollen der Bürste bei festgehaltenem Gehäuse. Die gewünschte Drehbewegung kann an jeder festen Abstützung, außer im Mund auch an der Wange oder an der Hand ausprobiert werden.

Bei Patienten mit lockeren Zahnkronen oder Brücken sollte die Drehrichtung dementsprechend entgegengesetzt eingeleitet werden.

Eine erhebliche bauliche Vereinfachung ergibt sich durch die Integration des Ein-Ausschalters mit der Wechselschalteinrichtung und der federnden Drehmomentstütze für den Motor. Da dieses Aggregat nur im Inneren des Gehäuses vorgesehen ist, stört keine Erhebung und kein Schaltelement die glatte äußere Rohrform des Gehäuses.

Die Neuerung der hier beschriebenen Rotationszahnbürste vereinigt nun die Vorteile der Walzenbürste mit einer sehr einfach zu betätigenden Drehrichtungsauswahl ohne zusätzliche äußere Schaltelemente.

Eine Ausführungsform der erfindungsgemäßen Rotationszahnbürste wird nachfolgend anhand von Zeichnungen dargestellt.
Es zeigen:

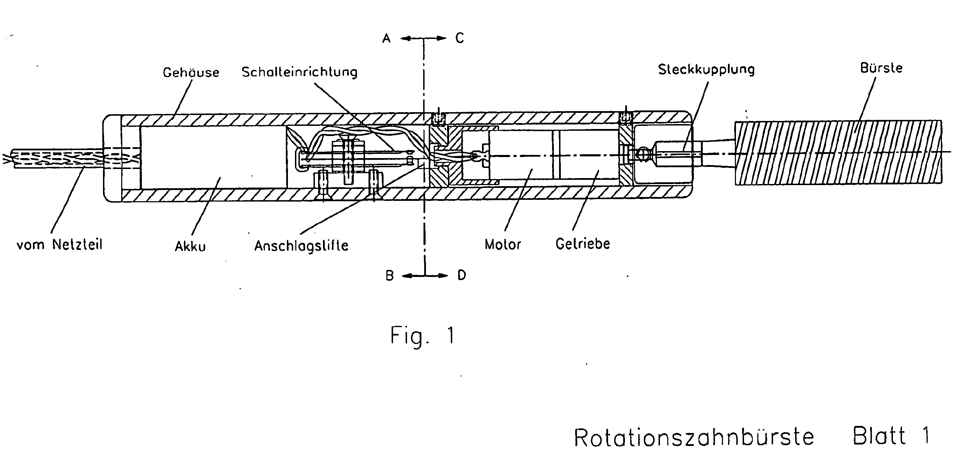

- Fig. 1: einen Längsschnitt durch die Rotationszahnbürste
- Fig. 2: einen Querschnitt mit Blickrichtung A-B auf den Kontaktfedersatz
- Fig. 3: Darstellung des Drehwinkels zur Kontaktbetätigung
- Fig. 4: einen Querschnitt mit Blickrichtung C-D auf die Anschlagstifte mit Anschlagbegrenzung
- Fig. 5: eine Darstellung der Schalteinrichtung (Kontaktfedersatz)
- Fig. 6: eine Darstellung der Schaltung für den Motorantrieb mit Logiktabelle

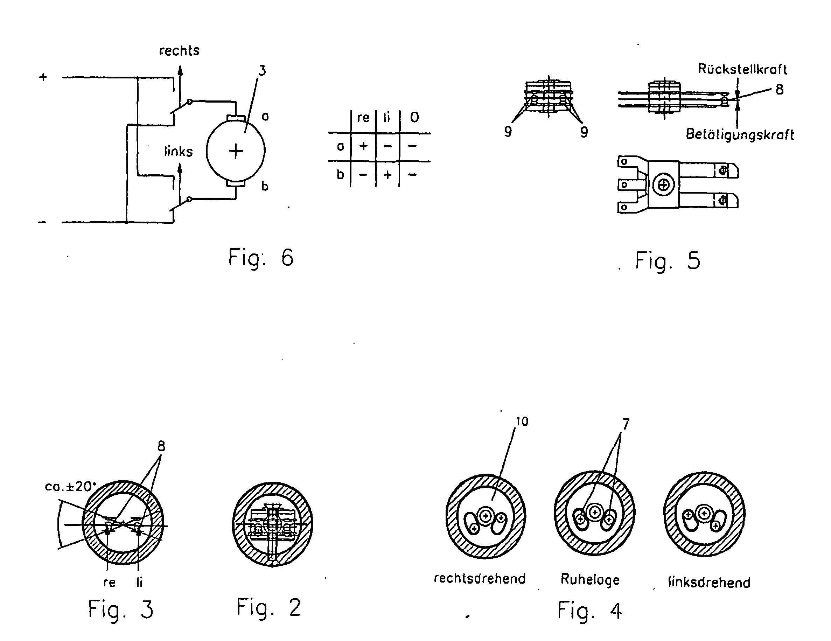

Das Einschalten des Motors (3) wird durch eine im Gehäuse (1) untergebrachte Schaltvorrichtung (2) erreicht. Dazu ist der Motor (3) mit Getriebe (4) und aufgesteckter Bürste (5) drehbar im Gehäuse (1) gelagert. Zwei Anschlagstifte (7) begrenzen den Drehwinkel (Fig. 3) nach rechts oder links. Durch zwei Federn (8) werden die Anschlagstifte (7) und damit der Motor (3) mit Bürste (5) in eine mittlere Lage gedreht, bei der sich die Federkräfte kompensieren. Als Feder (8) kann vorzugsweise ein Kontaktfedersatz (Fig. 5) verwendet werden, wie er aus der Relaistechnik her bekannt ist. Die Rückstellkraft der Kontaktfedern (8) genügt, um den Motor (1) in die Ruhelage zu drehen, gleichzeitig dienen die Kontakte (9) zum Schalten des Motors (3).

Mit zwei Kontaktfedern (8) mit je einem Umschaltkontakt (9) kann eine Brückenschaltung (Fig. 6) zur Drehrichtungsumkehr des Motors (3) gebildet werden. Der Motor (3) mit Getriebe (4) hat ein Reibungsmoment, das einer Drehung an der Getriebewelle (6) entgegenwirkt. Dieses Reibungsmoment wird noch unterstützt durch den in Ruhestellung über die Kontakte (8) kurzgeschlossenen Motor (3), weil die EMK (Elektro-Motorische Kraft) einem äußeren Drehmoment entgegenwirkt. Damit ergibt sich eine stabile Ruhelage (Fig. 4).
Wird nun ein äußeres Drehmoment durch Verdrehen des Gehäuses gegenüber der Bürste ausgeübt, dann verdreht sich zuerst mit der Bürste der Motor mit Getriebe in seiner Lagerung und betätigt damit über die Anschlagstifte (7) den jeweiligen Kontakt (9) für Rechts- oder Linksdrehung. Damit läuft der Motor an und verstärkt durch das Last-Drehmoment die Kontaktbetätigung. Die Drehung wird durch die Anschlagstifte an einem Anschlag (10) im Gehäuse begrenzt.
Der Motor läuft, solange das äußere Lastmoment anliegt. Wird die Bürste entlastet, z.B. indem sie im Mund frei läuft oder aus dem Mund herausgeführt wird, dann wird der Motor von den Federn in die Ruhelage gedreht und der Motor wird ausgeschaltet. Die Gegen-EMK wirkt hierbei wiederum als Motorbremse, sodass der Motor rasch zum Stillstand kommt.
Der Vorgang für die andere Drehrichtung erfolgt analog dazu in gleicher Weise. Versuchsweise kann die gewünschte Drehbewegung auch außerhalb des Mundes an jeder Abstützung, z.B. an der Wange oder an der Hand ausprobiert werden.
Eine gewisse Vorsicht ist bei Anwendung bei lockeren Zahnkronen oder Zahnersatz geboten. Dort kann es sinnvoll sein, die Drehrichtung entgegengesetzt zu verwenden.

Die Stromversorgung der Rotationszahnbürste kann in bekannter Weise schnurlos mit einem Akku erfolgen, der über eine Ladevorrichtung im Abstellbehälter wieder aufgeladen wird.
Oder die Zahnbürste wird über ein Kabel von einem Steckernetzteil versorgt, das nach den Standards für Medizingeräte vollisoliert ist.

## Patentansprüche

1. Rotationszahnbürste in Rohrformbauweise, mit einem rohrförmigen Gehäuse (1), in dem ein elektrischer Motor (3) mit einem Getriebe (4) angeordnet ist, mit einer Bürste (5), die an der Stirnseite des Gehäuses (1) auf eine Getriebewelle (6) lösbar aufgesteckt ist, wobei die Längsachsen von Bürste (5), Getriebewelle (6), Motor (3) und Gehäuse (1) in einer Linie verlaufen, und mit einer im Gehäuse (1) angeordneten elektrischen Schalteinrichtung (2) zum Ein und Ausschalten des Motors (3) sowie zur Einstellung der Drehrichtung des Motors (3) und damit der Bürste (5), **dadurch gekennzeichnet, dass** der Motor (3) im Gehäuse (1) um die Längsachse gegen eine federnde Drehmomentstütze
in einem begrenzten Schwenkbereich von etwa 20 Grad drehbeweglich gelagert ist, wobei zur Begrenzung der Schwenkbewegung Anlagestifte (7) vorgesehen sind, die mit Anschlägen (10) zusammenwirken, und wobei durch Drehung des Motors (3) relativ zum Gehäuse (1) beim erreichen der Schwenkbereichsgrenzen die Schalteinrichtung (2) betätigt wird, und dass bei an den Zähnen angelegter Bürste (5) die Drehung des Motors (3) relativ zum Gehäuse (1) durch manuelles Drehen des Gehäuses (1) um seine Längsachse erfolgt, wobei jeder Drehrichtung des Gehäuses (1) eine Drehrichtung der Bürste (5) zugeordnet ist.

2. Rotationszahnbürste nach Anspruch 1, **dadurch gekennzeichnet, dass** die manuelle Drehbewegung im Schwenkbereich gegen Federkraft wirkt, die auch das Rückstellmoment zur Beendigung des motorischen Drehvorganges aufbringt.

3. Rotationszahnbürste nach Anspruch 1 oder 2, **dadurch gekennzeichnet, dass** die Federkraft durch Kontaktzungen (8) der elektrischen Schalteinrichtung (2) aufgebracht wird.

4. Rotationszahnbürste nach einem der Ansprüche 1-3, **dadurch gekennzeichnet, dass** die Schalteinrichtung (2) als Wechselschalteinrichtung für die wahlweise Drehrichtung und als Ein-Ausschalter ausgebildet ist.

## Claims

1. Rotary tooth brush in pipe form design, with pipe-shaped housing (1) containing an electrical motor (3) and its drive (4). The a brush (5) is plugged (releasable) onto a gear shaft (6) at the front of the housing (1). Brush (5), gear shaft (6), motor (3) and housing (1) are in line with the longitudinal axis. The housing (1) contains an electric switch-on/off device (2) permitting the motor (3) to be switched on and off as well as the configuration of the motor's (3) direction of rotation and thus the brush (5). It is **characterised in that** the motor (3) - inside the housing (1) - is positioned around a longitudinal axis against a sprung torque arm in a limited pivoting range of approx. 20° permitting rotational movements. For the limitation of these rotational movements, touch pins (7) acting in combination with stop devices (10) are provided. The motor's (3) rotation relative to the housing (1) activates the switch-on device (2) when reaching the limits of the swinging area. When the brush (5) is in contact with the teeth, the motor's (3) rotation relative to the housing (1) is effected by manual turning of the housing (1) around the longitudinal axis. Each direction in which the housing (1) is rotated is allocated to a direction of rotation of the brush (5).

2. Rotary tooth brush according to claim 1, **characterised in that** manual rotation movements within the swinging area have an effect against the spring force and additionally result in the return torque in order to stop the powered rotation process.

3. Rotary tooth brush according to claim 1 or 2, **characterised in that** the spring force is effected by means of the contact blades (8) of the electric switch-on device (2).

4. Rotary tooth brush according to claim 1, 2 or 3, **characterised in that** the switch-on/off device (2) is designed as two-way switch device for switching on or off as well as for the selection of the rotational direction.

## Revendications

1. Brosse à dents rotative réalisée en forme tubulaire avec un boîtier en forme tubulaire (1) renfermant un moteur électrique (3) avec engrenage (4), avec une brosse (5) emboîtée de manière amovible sur un arbre de transmission (6) à l'avant du boîtier (1), les axes longitudinaux de la brosse (5), de l'arbre à transmission (6), du moteur (3) et du boîtier (1) étant disposés sur une ligne droite, ainsi qu'avec un dispositif de commande électrique (2) placée dans le boîtier (1), permettant d'allumer et d'éteindre le moteur (3) et de régler le sens de rotation du moteur (3) et par conséquent de la brosse (5), **se caractérisant en ce que** le moteur (3) est monté autour de l'axe longitudinal contre un bras de couple à ressort à l'intérieur du boîtier (1), de manière à pouvoir pivoter
Dans un angle de rotation limité d'environ 20 degrés ; des butées d'arrêt (7) ont été prévues pour limiter le mouvement rotatoire, agissant avec des butées (10) et confirmant ainsi le dispositif de commande (2) lorsque les limites de l'angle de rotation sont atteintes par la rotation du moteur (3) par rapport au boîtier (1)
et que, lorsque la brosse (5) est placée au niveau des dents, la rotation du moteur (3) par rapport au boîtier (1) s'effectue autour de son axe longitudinal par la rotation manuelle du boîtier (1), chaque sens de rotation du boîtier (1) correspondant au sens de rotation de la brosse (5).

2. Brosse à dents rotative selon la revendication 1, **caractérisée en ce que** la rotation manuelle dans l'angle de rotation agit contre la force d'un ressort qui applique aussi le couple de rappel qui interrompt le moteur tournant.

3. Brosse à dents rotative selon la revendication 1 ou 2, **caractérisée en ce que** la force du ressort est appliquée par des languettes de contact (8) du dispositif de commande électrique 2)

4. Brosse à dents rotative selon l'une des revendications 1 à 3, **caractérisée en ce que** le dispositif de commande (2) est conçue comme dispositif de commande alternatif pour le sens de rotation au choix et comme commutateur de marche et d'arrêt
